# EUROPÄISCHE PATENTSCHRIFT

(11) **EP 2 793 004 B1**
(45) Veröffentlichungstag und Bekanntmachung des Hinweises auf die Patenterteilung: **28.09.2016**
(21) Anmeldenummer: 14001333.5
(22) Anmeldetag: 11.04.2014
(51) Int. Cl.: G01F 23/22

(54) **Füllstandsanzeiger mit rotierendem Element**
Level indicator with a rotating element
Indicateur du niveau avec un élément rotatif

(30) Priorität: 18.04.2013 DE 102013103899
(43) Veröffentlichungstag der Anmeldung: 22.10.2014
(73) Patentinhaber: MBA Instruments GmbH, 25451 Quickborn (DE)
(72) Erfinder: Wengler, Frank, DE-23299 Hamburg (DE); Westphal, Hans-Heinrich, DE-22844 Norderstedt (DE)
(74) Vertreter: Jaeschke, Rainer

(56) Entgegenhaltungen:
- EP-A1- 1 790 958
- DE-B1- 2 818 968
- DE-U1-202004 003 925
- US-B2- 7 832 268

## Beschreibung

Die Erfindung betrifft einen Füllstandsanzeiger für Schüttgüter, welcher ein durch einen elektrischen Schrittmotor angetriebenes drehbares Element aufweist, das durch das Schüttgut bei Erreichen eines vorbestimmbaren Füllstandes an der Drehung gehindert wird, wodurch ein Signal ausgelöst wird, und welcher eine Auswerteeinheit aufweist, die die schrittweise Drehung des Schrittmotors und/oder des drehbaren Elements überwacht und ein Blockieren des Elements und/oder eine Drehung entgegen der vorgegebenen Motordrehung erfasst. Auch betrifft die Erfindung ein Verfahren zum Ermitteln des Füllstands mit einem solchen Füllstandsanzeiger.

Es ist bekannt, den Füllstand eines Behälters für Schüttgüter, pulverförmiges, körniges oder stückiges Gut mit einem so genannten Drehflügel-Messanzeiger zu erfassen. Der Drehflügel-Messanzeiger umfasst einen Motor, der einen in den Behälter hineinragenden Drehflügel antreibt. Die Drehung erfolgt relativ langsam mit einer Drehgeschwindigkeit von 1 U/min bis 10 U/min. Sobald der Füllstand in den Bereich des Drehflügels gelangt, wird die Drehung des Drehflügels blockiert oder zumindest gehemmt. Dies wird erkannt, und ein entsprechendes Füllstandssignal kann erzeugt werden, um beispielsweise weitere Vorgänge anzuhalten oder zu starten und insbesondere den Füllvorgang zu unterbrechen.

Häufig ist die Anordnung so getroffen und beispielsweise in der DE 78 13 153 U beschrieben, dass der Antriebsmotor auf einem Arm verschwenkbar in einem Gehäuse gelagert ist und sich bei blockiertem Flügel selbst verschwenkt und einen Schalter zum Auslösen eines Signal betätigt. Durch die Verschwenkung wird eine bestimmbare Zeit benötigt, bis das Signal ausgelöst. Dadurch werden Fehlsignale durch kurzfristiges Blockieren oder Verdrehen des Drehflügels entgegen der vorgegebenen Drehrichtung während des Einfüllvorgangs vermieden. Die Empfindlichkeit des Drehflügel-Messanzeigers wird durch eine mechanische Feder eingestellt, gegen die der Arm mit dem Antriebsmotor verschwenkt werden muss.

Aus der US 7,832,268 B2 ist es bekannt, als Antriebsmotor einen Schrittmotor zu verwenden. Der Stillstand des Motors wird erfasst und ein entsprechendes Signal wird erzeugt. Es sind hierzu Mittel vorhanden, mit denen die Drehbewegung überwacht wird. Weiterhin ist der Motor ebenfalls auf einem verschwenkbaren Arm gelagert, der bei einer Blockade des Drehflügels verschwenkt wird, bis er einen Endschalter zum Ausschalten des Motors betätigt. Die Empfindlichkeit dieses Füllstandsanzeigers kann durch eine Veränderung des Drehmoments des Schrittmotors eingestellt werden.

Die EP 1 790 958 A1 beschreibt eine Membranpumpe, deren Antriebsmotor als Schrittmotor ausgebildet ist. Bei einer Blockade des Motors wird nach einer vorbestimmten Anzahl von Schrittversuchen ein Fehlersignal erzeugt, und der Motor wird abgeschaltet. Nach der Reparatur wird der Motor weder manuell gestartet.

Aus der EP 1 357 366 B1 ist es bekannt, zwischen dem Drehflügel und dem Antriebsmotor eine Rutschkupplung vorzusehen. Hierdurch werden Überlastungen des Motors verhindert. Die Relativbewegung in der Rutschkupplung kann erkannt und zum Erzeugen eines Signals ausgewertet werden.

Allen Füllstandsanzeigern ist gemeinsam, dass drehbare Elemente zur Erfassung des Füllstands vorhanden sind, deren Drehbewegung überwacht wird. Die Einstellung der Parameter des Füllstandsanzeigers an unterschiedliche Anforderungen, wie Art des Schüttguts, Ansprechzeit oder Empfindlichkeit und dergleichen können nicht oder nur mit erhöhtem Zeitaufwand durchgeführt werden.

Der Erfindung liegt die Aufgabe zugrunde, einen Füllstandsanzeiger der eingangs geschilderten Art so auszubilden, dass er mechanisch robust ausgebildet ist und eine einfache Einstellung der Parameter erlaubt.

Die Aufgabe wird gemäß der Erfindung dadurch gelöst, dass die Auswerteeinheit einen Zähler für die Anzahl der Schrittversuche des Schrittmotors bei blockiertem Element aufweist und ein Signal nur dann auslöst, wenn der Schrittmotor für eine vorbestimmte Anzahl von Schritten blockiert ist, und dass der Schrittmotor nach Auslösen des Signals nach einer vorbestimmbaren Zeitdauer wieder startet. Diese Ausbildung hat den Vorteil, dass die Eigenschaften eines Schrittmotors in Bezug auf die Messung ausnutzt werden, indem die einzelnen Drehschritte erfasst und ausgewertet werden. Es ist insbesondere nicht mehr erforderlich, dass der Motor auf einem beweglichen Arm montiert ist. Auf verschleißanfällige oder empfindliche mechanische Komponenten kann daher verzichtet werden.

Weiterhin können die Empfindlichkeit und die Reaktionszeiten des Füllstandsanzeigers in einfacher Weise an die Umgebungsbedingungen und das zu erfassende Schüttgut angepasst werden. Es kann beispielsweise vorgesehen werden, dass die vorbestimmte Anzahl der Schrittversuche bis zum Auslösen des Signals einstellbar ist. Bei einer geringen erforderlichen Anzahl ist die Reaktionszeit besonders kurz, während sie mit zunehmender Anzahl länger wird. Das selbsttätige Wiederanfahren erlaubt eine kontinuierliche Überwachung des Füllstands des Behälters.

So kann bei der Überwachung eines Füllstands in einem Pufferspeicher bereits ein erfolgloser Schritt, also ein angesteuerter Schritt ohne tatsächliche Drehung der Antriebswelle, ein Signal auslösen. Bei gröberen Schüttgütern oder bei der Befüllung von Silos zum Bevorraten von Gütern können mehrere, beispielsweise 10 bis 15 erfolglose Schritte eingestellt werden, bis ein Signal ausgelöst wird. In jedem Fall kann die Auswerteeinheit und somit der Füllstandsanzeiger problemlos an die Anforderungen angepasst werden.

Es kann weiterhin vorgesehen werden, dass die Drehzahl des Schrittmotors einstellbar ist. Diese Einstellung ist bei Schrittmotoren ohne weiteres durchführbar. Eine schnellere Drehbewegung bewirkt ebenfalls eine kürzere Reaktionszeit des Füllstandsanzeigers.

Auch kann das Drehmoment des Schrittmotors einstellbar sein. Ein höheres Drehmoment kann bei schwereren Schüttgütern zweckmäßig sein, um Fehlsignale zu vermeiden. Bei einem kleineren Drehmoment steigt die Empfindlichkeit an.

Besonders zweckmäßig ist es, wenn der Schrittmotor nach Auslösen des Signals für eine vorbestimmbare Zeitdauer abgeschaltet wird. Hierdurch wird eine Überlastung oder Überhitzung des Schrittmotors vermieden. Vorzugsweise ist ein Zeitgeber vorhanden ist, der den Schrittmotor nach der vorbestimmbaren Zeitdauer nach dem Abschalten wieder einschaltet. Dadurch ist es möglich, den Füllstand periodisch zu überprüfen und bei sinkendem Niveau ein entsprechendes Signal zu erzeugen. Der Füllstandsanzeiger kann daher auch eingesetzt werden, um einen zu niedrigen Füllstand in einem Behälter zu erkennen. Eine Überhitzung des Motors und somit eine Erwärmung des Schüttguts ist nicht zu befürchten.

Weiterhin ist es günstig, wenn die Anzahl der Schritte bis zum Auslösen des Signals und/oder die Drehzahl und/oder das Drehmoment und/oder die Zeitdauer bis zum Einschalten des Schrittmotors über Schalter einstellbar sind. Dies erleichtert die Bedienung und Konfiguration des Füllstandsanzeigers wesentlich, da beispielsweise anhand von Tabellen mit verschiedenen Schüttgütern bestimmte Parameter des Füllstandsanzeigers durch das vor Ort anwesende Personal ohne weitere Fachkenntnisse einstellbar sind.

Weiterhin kann die Drehrichtung des Schrittmotors einstellbar sein. So ist es möglich, dass beispielsweise nach jedem Ausschalten des Motors dessen Drehrichtung beim nächsten Einschalten geändert wird. Ein festgefahrener Motor oder Anbackungen an dem drehbaren Element können hierdurch gelöst werden.

Es kann vorgesehen werden, dass der Schrittmotor, die Auswerteeinheit, der Zähler und/oder der Zeitgeber und/oder die Schalter in dem Gehäuse des Füllstandsanzeigers angeordnet sind. Dann wird zum Anschließen des Füllstandsanzeigers lediglich eine Stromversorgungsleitung und eine Signalleitung für das erzeugte Signal benötigt.

Es kann aber auch vorgesehen werden, dass die Auswerteeinheit, der Zähler und/oder der Zeitgeber und/oder die Schalter außerhalb des Gehäuses des Füllstandsanzeigers angeordnet sind. Dies hat den Vorteil, dass die Parameter für den Füllstandsanzeiger geändert werden können, ohne dass ein Öffnen des Gehäuses oder ein Erreichen des Gehäuses in oder an dem Behälter erforderlich ist. Auch ist es möglich, bei unbekannten Schüttgütern oder bei Schüttgütern mit unbekannten Eigenschaften die Konfiguration empirisch durchzuführen, in dem der Füllstand zunächst visuell überwacht und die Empfindlichkeit des Füllstandsanzeigers entsprechend eingestellt wird.

Bei dem Verfahren zum Ermitteln des Füllstands eines Behälters mit einem über einen elektrischen Schrittmotor angetriebenen drehbaren Element das durch das Schüttgut bei Erreichen eines vorbestimmbaren Füllstandes an der Drehung gehindert wird, ist vorgesehen, dass die schrittweise Drehung des Schrittmotors und/oder des Elements überwacht wird, dass ein Stillstand des Schrittmotors oder eine Drehung des drehbaren Elements entgegen der vorgegebenen Drehrichtung erfasst wird, dass die Anzahl der sich anschließenden erfolglosen Schrittversuche erfasst wird und dass bei Überschreiten einer vorbestimmbaren Anzahl von aufeinander folgenden erfolglosen Schrittversuchen ein Signal erzeugt wird, das den Füllstand repräsentiert, und dass der Schrittmotor nach dem Auslösen des Signals nach einer vorbestimmbaren Zeitdauer sich wieder einschaltet. Die Anzahl der aufeinander folgenden erfolglosen Schrittversuche bis zur Erzeugung des Signals ist vorzugsweise einstellbar.

Es ist weiterhin vorgesehen, dass insbesondere das Drehmoment, die Drehzahl, die Anzahl der erfolglosen Schrittversuche bis zur Signalauslösung, die Stillstandzeit und/oder die Ruhezeit eingestellt werden können. Die verschiedenen Parameter erlauben grundsätzlich eine Vielfalt von Einstellungsmöglichkeiten, die jedoch in manchen Kombinationen nicht immer zweckmäßig sind.

Das Drehmoment des Schrittmotors kann beispielsweise im Bereich von 50 bis 500 Nmm und in Sonderanwendungen von 2 bis 25 Nm eingestellt werden. Die Drehzahl kann zum Beispiel zwischen 1 U/min und 15 U/min einstellbar sein. Die Anzahl der Fehlversuche kann zwischen 1 und 100 variieren. Dann kann eine Stillstandzeit festgelegt werden, nach welcher eine so erfasste Blockade als Stillstand der Welle erkannt wird. Diese Zeit kann zwischen 1 sec und 30 sec betragen. Nach dieser Zeit schaltet sich der Motor ab oder in einen Ruhezustand, und das Signal wird ausgelöst. Schließlich kann noch die Ruhezeit festgelegt werden, für die der Motor ausgeschaltet ist beziehungsweise nach welcher ein erneuter Schrittversuch nach einer Stillstandserkennung wieder durchgeführt wird. Die Zeit kann beispielsweise zwischen 1 sec und 3600 sec einstellbar sein.

Der erfindungsgemäße Füllstandanzeiger erlaubt eine einfache Einstellung durch den Betreiber. Es reicht daher aus, bestimmte Parametersätze zusammenzustellen und diese beispielsweise durch einen Drehschalter auszuwählen. Der Drehschalter kann beispielsweise mit acht, zehn oder mehreren Stellungen ausgestattet sein, so dass eine Auswahl von voreingestellten Parametersätzen in einfacher Weise erfolgen kann. Selbstverständlich können die Parameter auch einzeln an unterschiedliche Schüttgüter, Einbauorte oder Anwendungen angepasst werden.

Im Folgenden werden acht Standardanwendungen genannt, für die Parametersätze festgelegt wurden.
Stellung 1
   Geringes Drehmoment, geringe Anzahl von Fehlversuchen Anwendung: Füllstandmessung für leichte Produkte
Stellung 2
   Mittleres Drehmoment, geringe Anzahl von Fehlversuchen Anwendung: Füllstandmessung für mittelschwere Produkte
Stellung 3
   Großes Drehmoment, geringe Anzahl von Fehlversuchen Anwendung: Füllstandmessung für schwere Produkte
Stellung 4
   Mittleres Drehmoment, relativ kurze Ruhezeit Anwendung: Leerstandmessung für leichte Produkte
Stellung 5
   Großes Drehmoment, relativ kurze Ruhezeit Anwendung: Leerstandsmessung für mittelschwere oder schwere Produkte
Stellung 6
   Großes Drehmoment, relativ lange Ruhezeit Anwendung: Leerstandsmessung für Holzspäne
Stellung 7 Großes Drehmoment, relativ hohe Drehzahl Anwendung: Füllstandsmessung für Holzspäne
Stellung 8
   Geringes Drehmoment, große Drehzahl, kleine Anzahl von Fehlversuchen, kurze Stillstandszeit, kurze Ruhezeit Anwendung: Überlaufmessung in einem Pufferbehälter kürzeste Reaktionszeit)

Mit diesen beispielhaften Voreinstellungen können eine Vielzahl von möglichen Anwendungen abgedeckt werden. Ein kompliziertes Konfigurieren vor Ort kann entfallen.

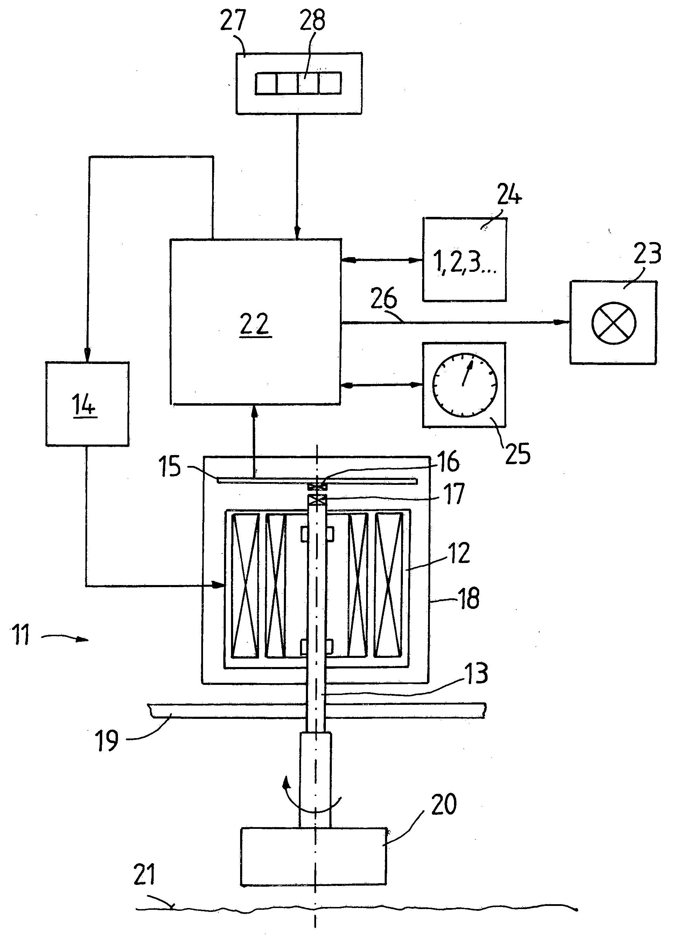

Die Erfindung wird im Folgenden anhand der schematischen Zeichnung näher erläutert. Die einzige Figur zeigt einen Füllstandsanzeiger in der Seitenansicht.

Der in der Zeichnung dargestellte Füllstandsanzeiger 11 weist einen elektrischen Schrittmotor 12 auf, der eine Antriebswelle 13 antreibt. Der Schrittmotor 12 wird über eine Steuereinheit 14 angesteuert derart, dass der Motor 12 die Antriebswelle schrittweise in Drehrichtung dreht. Die Ansteuerung eines Schrittmotors ist allgemein bekannt und bedarf daher keiner weiteren Erläuterung.

Es ist eine Überwachungseinrichtung 15 vorhanden, durch die die Drehung des Schrittmotors 12 bei jedem Schritt erfasst werden kann. Die Überwachungseinrichtung 15 kann wenigstens einen Hallsensor 16 und einen Permanentmagneten 17 aufweisen, durch die jede Teildrehung der Antriebswelle 13 nach einem angesteuerten Schritt des Schrittmotors 12 erfasst wird. Insbesondere ist es möglich, eine blockierte Antriebswelle zu erkennen.

Die Antriebswelle 13 ist aus dem Gehäuse 18 des Füllstandsanzeigers 11 hinausgeführt und ragt durch eine Wandung 19 des nicht gezeigten Behälters, dessen Füllstand erfasst werden soll, hinein. Am freien Ende der Antriebswelle 13 ist ein Drehflügel 20 angeordnet, der somit durch den Schrittmotor 12 angetrieben wird. Sobald das Niveau 21 der Behälterfüllung in den Bereich des Drehflügels 20 gelangt, wird dieser an seiner Drehung gehindert. Sobald eine vollständige Blockade des Drehflügels durch das Schüttgut erfolgt, kann sich die Antriebswelle nicht mehr drehen, so dass der Schrittmotor 12 einen angesteuerten Drehschritt nicht mehr durchführen kann. Es kommt zu einer erfolglosen Schrittansteuerung, die durch die Überwachungseinrichtung 15 erfasst wird. Unter einer erfolglosen Schrittansteuerung oder einem erfolglosen Schrittversuch soll hier verstanden werden, dass trotz einer angesteuerten Drehbewegung keine Drehung der Antriebswelle erfolgt. Ein solcher Vorgang kann durch die Überwachungseinrichtung 15 erfasst werden.

Die Überwachungseinrichtung 15 steht in Verbindung mit einer Auswerteinheit 22, die diesen erfassten Stillstand beziehungsweise die erfolglose Schrittansteuerung auswertet. Ein stehender Drehflügel 20 weist auf einen befüllten Behälter hin, so dass die Auswerteeinheit 22 ein Signal 26 beispielsweise zu einer Anzeigeeinheit 23 ausgibt. Die Anzeigeeinheit 23 kann als Signalleuchte ausgebildet sein. Auch ist es beispielsweise möglich, dass durch das Signal 26 ein Füllvorgang automatisch abgebrochen wird oder eine andere Einrichtung geschaltet wird.

Insbesondere bei der Füllstandsüberwachung von Schüttgütern kann der Drehflügel 20 durch auftreffendes Schüttgut kurzfristig blockiert werden, ohne dass der Behälter tatsächlich gefüllt ist. Um derartige Fehlsignale zu vermeiden ist ein Zähler 24 vorgesehen, der nach einer erfolglosen Schrittansteuerung die sich anschließenden erfolglosen Schritte des Schrittmotors zählt. Sobald der Zähler eine voreingestellte Anzahl erfolgloser Schrittansteuerungen erreicht, wird das Signal 26 für die Anzeigeinheit 23 durch die Auswerteinheit 22 erzeugt. Durch Variation der zu erreichenden Anzahl der erfolglosen Schrittansteuerungen kann die Empfindlichkeit des Füllstandsanzeigers in einfacher Weise eingestellt werden.

Falls sich der Drehflügel vor Erreichen der eingestellten Anzahl wieder drehen kann, war er nur kurzfristig gehemmt und das Füllniveau ist noch nicht erreicht. Der Füllstandsanzeiger arbeitet wieder im normalen Betriebsmodus, und der Zähler 24 wird zurückgesetzt.

Sobald der Drehflügel 20 blockiert ist, kann sich der Schrittmotor 12 nicht mehr weiter drehen. Es kommt zu einer Vielzahl von erfolglosen Schrittversuchen, wodurch sich der Motor schnell erhitzen wird. Um eine Überhitzung zu vermeiden und zur Schonung des Schrittmotors ist daher eine Abschaltung des Motors 12 nach der Erzeugung des Signals 26 für die Anzeigeeinheit 23 vorgesehen. Im Einzelnen ist die Anordnung so getroffen, dass ein Zeitgeber 25 vorgesehen ist, der gestartet wird, sobald das Signal 26 generiert worden ist. Auch wird der Schrittmotor 12 über die Auswerteeinheit 22 und die Steuereinheit ausgeschaltet beziehungsweise in einen Ruhemodus gesetzt. Im Ruhemodus erfolgen keine Schrittversuche, und es wird keine Wärme erzeugt.

Nach einer einstellbaren Zeitdauer wird der Schrittmotor 12 wieder aktiviert und es erfolgt ein Schrittversuch. Ist dieser oder eine bestimmte aufeinander folgende Anzahl erfolglos, ist der Drehflügel immer noch blockiert und der Füllstandsanzeiger wird wieder in den Ruhezustand gesetzt. Der zurückgesetzte Zeitgeber 25 läuft erneut und gibt nach der vorbestimmten Zeitdauer wieder das Signal zum erneuten Starten des Schrittmotors. Durch diese Maßnahme erfolgt eine periodische Überwachung des Füllstands ohne dass die Gefahr einer Überhitzung oder eines Durchbrennens des Schrittmotors besteht.

Der Füllstandsanzeiger kann daher auch zum Detektieren eines leeren Behälters verwendet werden. Hier ist der blockierte Drehflügel der normale Zustand und der Motor wird entsprechend der eingestellten Zeitdauer periodisch angeschaltet. Sobald der Motor sich drehen kann, ist der Drehflügel 20 frei und das Füllniveau 21 des zu überwachenden Behälters ist unterhalb eines bestimmten Stands, so dass ein Signal für die Anzeigevorrichtung 23 erzeugt wird.

Die Auswerteeinheit 22 ist mit einer Eingabeeinheit 27 verbunden, um die einzelnen Parameter für den Füllstandsanzeiger 11 einstellen zu können. Über mehrere Schalter 28 können insbesondere die Anzahl der erfolglosen Schrittversuche bis zur Erzeugung des Signals 26, die Zeitdauer für den Zeitgeber 25 für den Ruhezustand, das Drehmoment und/oder die Drehgeschwindigkeit des Schrittmotors eingestellt werden.

Durch Erhöhung der Drehgeschwindigkeit und/oder Verringerung der Anzahl der erfolglosen Schrittversuche wird die Reaktionszeit verkürzt. Auch wird die Ansprechzeit verringert. Durch die Erhöhung des Drehmoments können Einflüsse durch Luftverwirblungen oder Staubbildung, beim Befüllen verringert werden. Die Zeitdauer des Ruhezustands wird entsprechend der Anforderungen eingestellt. Bei Behältern mit hohem Durchsatz kann eine kürzere Zeitdauer zweckmäßig sein. Soll ein entleerter Behälter angezeigt werden, kann auch eine längere Zeitdauer eingestellt werden.

Ein solcher Füllstandsanzeiger kann problemlos und ohne weiteres an unterschiedliche Schüttguteigenschaften angepasst werden. Die Eingabeeinheit 27 kann sich innerhalb des Gehäuses 18 des Füllstandsanzeigers befinden. Dies ist dann zweckmäßig, wenn sich das Gehäuse gut zugänglich außerhalb des Behälters befindet. Sofern sich der Füllstandsanzeiger jedoch an einem schwer zugänglichen Ort befindet, kann die Eingabeeinheit 27 auch außerhalb des Gehäuses angeordnet sein. Dann ist eine Anpassung des Füllstandsanzeigers 11 an die Schüttguteigenschaften schnell und auch während des Betriebs möglich.

Bei dem in der Zeichnung dargestellten Ausführungsbeispiel wird der Drehflügel 20 direkt durch die Antriebswelle 13 angetrieben. Es kann aber auch ein Getriebe oder eine Rutschkupplung zwischen dem Schrittmotor 12 und dem Drehflügel 20 vorgesehen sein, um beispielsweise die gewünschte Rotationsgeschwindigkeit des Drehflügels zu erreichen. Weiterhin kann der Drehflügel lösbar mit der Antriebswelle verbunden sein. Dann kann der Drehflügel leicht ausgetauscht werden.

Der in der Zeichnung gezeigte Füllstandsanzeiger ist für den vertikalen Einbau in einen Behälter ausgelegt, bei welchem der Drehflügel von oben in den Innenraum hineinragt. Es kann aber auch ein horizontaler oder schräger Einbau vorgesehen werden. Auch kann ein Winkelgetriebe vorhanden sein, um eine vertikale oder horizontale Ausrichtung der Drehachse des Drehflügels an beliebige Montagewinkel der Gehäuses 18 am Behälter zu ermöglichen. Auch kann die Antriebswelle ein Drahtseil sein oder durch ein Rohr gegen einwirkendes Schüttgut geschützt werden. Diese Möglichkeiten sind allgemein bekannt und bedürfen daher keiner weiteren Erläuterung.

Durch das Fehlen beweglicher Teile zum Schalten des Signals ist der Füllstandsanzeiger robust aufgebaut und kann auch unter den vorliegenden rauen Betriebsbedingungen zuverlässig funktionieren. Durch die einfache Parametrierung kann der Füllstandsanzeiger flexibel an unterschiedliche Schüttgüter, Umgebungsbedingungen oder Anforderungen angepasst werden.

Eine der zusätzlichen Anforderungen ist die Möglichkeit einer Parametereinstellung derart, dass der Füllstandanzeiger eine Doppelfunktion ausführt. Der Füllstandsanzeiger ist dabei mit einem besonders großen Flügel ausgerüstet, der das Schüttgut eines Schüttkegels durch sein einstellbares Drehmoment solange zur Seite schiebt und über den Querschnitt des Behälters verteilt, bis das Schüttgut den Drehflügel vollkommen bedeckt und der Drehflügel das Schüttgut nicht mehr zur Seite schieben kann. Der Drehflügel erstreckt sich dabei zumindest näherungsweise über den gesamten Querschnitt des Behälters.

Erst dann tritt die Funktion des Füllstandanzeigers ein, indem das Drehmoment überschritten wird. Es folgt ein Stillstand des Drehflügels, und es wird ein Signal wie oben beschrieben erzeugt. Hierdurch wird einerseits die Füllstandfunktion ausgeführt und andererseits wird der Schüttkegel bei vertikalem Einbau in einem Silo so lange geglättet, bis das Silo, je nach Höheneinstellung des Flügels, gänzlich gefüllt ist. Der Schrittmotor hat bei dieser Doppelfunktion ein besonders hohes Drehmoment, da er auch die ständige Verteilung des Schüttgutes übernimmt. Lediglich im Falle der "Überlastung", also bei vollem Silo, wird ein Signal erzeugt, und der Motor wird wie oben erläutert ausgeschaltet und nach der Ruhezeit wieder eingeschaltet. Ein zusätzlicher Füllstandsanzeiger wird dann nicht mehr benötigt.

## Patentansprüche

1. Füllstandsanzeiger (11) für Schüttgüter, welcher ein durch einen elektrischen Schrittmotor (12) angetriebenes drehbares Element (20) aufweist, das durch das Schüttgut bei Erreichen eines vorbestimmbaren Füllstandes (21) an der Drehung gehindert wird, wodurch ein Signal ausgelöst wird, und welcher eine Auswerteeinheit (22) aufweist, die die schrittweise Drehung des Schrittmotors (12) und/oder des drehbaren Elements (20) überwacht und ein Blockieren des Elements und/oder eine Drehung entgegen der vorgegebenen Motordrehung erfasst, **dadurch gekennzeichnet, dass** die Auswerteeinheit (22) einen Zähler (24) für die Anzahl der Schrittversuche des Schrittmotors (12) bei blockiertem Element (20) aufweist und ein Signal (26) nur dann auslöst, wenn der Schrittmotor (12) für eine vorbestimmte Anzahl von Schritten blockiert ist, und dass der Schrittmotor (12) nach Auslösen des Signals (26) nach einer vorbestimmbaren Zeitdauer wieder startet.

2. Füllstandsanzeiger nach Anspruch 1, **dadurch gekennzeichnet, dass** die vorbestimmbare Zeitdauer vor dem Wiederanfahren des Schrittmotors einstellbar ist.

3. Füllstandsanzeiger nach Anspruch 1 oder 2, **dadurch gekennzeichnet, dass** die vorbestimmte Anzahl der Schrittversuche bis zum Auslösen des Signals (26) einstellbar ist.

4. Füllstandsanzeiger nach einem der Ansprüche 1 bis 3, **dadurch gekennzeichnet, dass** die Drehzahl des Schrittmotors (12) einstellbar ist.

5. Füllstandsanzeiger nach einem der Ansprüche 1 bis 4, **dadurch gekennzeichnet, dass** das Drehmoment des Schrittmotors (12) einstellbar ist.

6. Füllstandsanzeiger nach einem der Ansprüche 1 bis 5, **dadurch gekennzeichnet, dass** die Anzahl der Schritte bis zum Auslösen des Signals und/oder die Drehzahl und/oder das Drehmoment und/oder die Zeitdauer bis zum Einschalten des Schrittmotors über Schalter (28) einstellbar sind.

7. Füllstandsanzeiger nach einem der Ansprüche 1 bis 6, **dadurch gekennzeichnet, dass** die Drehrichtung des Schrittmotors (12) einstellbar ist.

8. Füllstandsanzeiger nach einem der Ansprüche 1 bis 7, **dadurch gekennzeichnet, dass** der Schrittmotor (12), die Auswerteeinheit (22), der Zähler (24) und/oder der Zeitgeber (25) und/oder die Schalter (28) in dem Gehäuse des Füllstandsanzeigers angeordnet sind.

9. Füllstandsanzeiger nach einem der Ansprüche 1 bis 8, **dadurch gekennzeichnet, dass** die Auswerteeinheit, der Zähler und/oder der Zeitgeber und/oder die Schalter außerhalb des Gehäuses des Füllstandsanzeigers angeordnet sind.

10. Verfahren zum Ermitteln des Füllstands eines Behälters mit einem über einen elektrischen Schrittmotor angetriebenen drehbaren Element, das durch das Schüttgut bei Erreichen eines vorbestimmbaren Füllstandes (21) an der Drehung gehindert wird, bei welchem Verfahren die schrittweise Drehung des Schrittmotors überwacht wird und ein Stillstand des Schrittmotors oder ein Blockieren des drehbaren Elements oder eine Drehung des drehbaren Elements entgegen der vorgegebenen Drehrichtung erfasst wird, **dadurch gekennzeichnet, dass** die Anzahl der sich anschließenden erfolglosen Schrittversuche erfasst wird, dass bei Überschreiten einer vorbestimmbaren Anzahl von aufeinander folgenden erfolglosen Schrittversuchen ein Signal erzeugt wird, das den Füllstand repräsentiert, und dass der Schrittmotor nach dem Auslösen des Signals nach einer vorbestimmbaren Zeitdauer sich wieder einschaltet.

11. Verfahren nach Anspruch 10, **dadurch gekennzeichnet, dass** als Parameter das Drehmoment, die Drehzahl, die Stillstandszeit, die Ruhezeit und/oder die Anzahl der aufeinander folgenden erfolglosen Schrittversuche bis zur Erzeugung des Signals einstellbar sind.

12. Verfahren nach einem der Ansprüche 10 oder 11, **dadurch gekennzeichnet, dass** wenigstens zwei und vorzugsweise alle einstellbare Parameter in einer voreingestellten Größe und in einer bestimmten Relation zueinander über wenigstens einen Vorwahlschalter als Parametersätze direkt einstellbar sind.

13. Verfahren nach einem der Ansprüche 10 bis 12, **dadurch gekennzeichnet, dass** der Schrittmotor nach dem Auslösen des Signals für eine vorbestimmte Zeit abgeschaltet wird.

## Claims

1. Fill level indicator (11) for bulk goods which has a rotatable element (20) driven by an electric stepper motor (12), said element being prevented from rotating by the bulk goods when a predetermined fill level (21) is reached, whereby a signal is triggered, and which has an evaluation unit (22) which monitors the incremental rotation of the stepper motor (12) and/or the rotatable element (20) and detects a blocking of the element and/or a rotation against the predetermined motor rotation, **characterised in that** the evaluation unit (22) has a counter (24) for the number of step attempts of the stepper motor (12) in the case of a blocked element (20) and a signal (26) is only then triggered if the stepper motor (12) is blocked for a predetermined number of steps, and the stepper motor (12) restarts after a predeterminable duration after the signal (26) has been triggered.

2. Fill level indicator according to claim 1, **characterised in that** the predeterminable duration before the stepper motor is restarted is adjustable.

3. Fill level indicator according to claim 1 or 2, **characterised in that** the predetermined number of step attempts until the signal (26) is triggered is adjustable.

4. Fill level indicator according to one of claims 1 to 3, **characterised in that** the rotational speed of the stepper motor (12) is adjustable.

5. Fill level indicator according to one of claims 1 to 4, **characterised in that** the torque of the stepper motor (12) is adjustable.

6. Fill level indicator according to one of claims 1 to 5, **characterised in that** the number of steps until the signal is triggered and/or the rotational speed and/or the torque and/or the duration until the stepper motor is switched on is adjustable via switches (28).

7. Fill level indicator according to one of claims 1 to 6, **characterised in that** the direction of rotation of the stepper motor (12) is adjustable.

8. Fill level indicator according to one of claims 1 to 7, **characterised in that** the stepper motor (12), the evaluation unit (22), the counter (24) and/or the timer (25) and/or the switches (28) are arranged in the housing of the fill level indicator.

9. Fill level indicator according to one of claims 1 to 8, **characterised in that** the evaluation unit, the counter and/or the timer and/or the switches are arranged outside the housing of the fill level indicator.

10. Method for determining the fill level of a container having a rotatable element driven via an electrical stepper motor, said element being prevented from rotating by the bulk goods when a predetermined fill level (21) is reached, in which method the incremental rotation of the stepper motor is monitored and a standstill of the stepper motor or a blocking of the rotatable element or a rotation of the rotatable element against the predetermined direction of rotation is detected, **characterised in that** the number of subsequent, unsuccessful step attempts is detected; in the case of exceeding a predetermined number of consecutive unsuccessful step attempts, a signal is generated which represents the fill level; and the stepper motor is switched back on after a predetermined period after the signal has been triggered.

11. Method according to claim 10, **characterised in that** the torque, the rotational speed, the standstill time, the down time and/or the number of consecutive unsuccessful step attempts until generation of the signal are adjustable as parameters.

12. Method according to one of claims 10 or 11, **characterised in that** at least two and preferably all adjustable parameters are directly adjustable as parameters sets within a pre-established degree and in a specific relation to one another via at least one preselection switch.

13. Method according to one of claims 10 to 12, **characterised in that** the stepper motor is switched on for a predetermined time after the signal has been triggered.

## Revendications

1. Indicateur de niveau (11) de produits en vrac qui comporte un élément rotatif (20) entraîné par un moteur électrique pas à pas (12) dont la rotation est empêchée par les produits en vrac lorsqu'un niveau pouvant être prédéfini (21) a été atteint, un signal étant ainsi déclenché, et qui comporte une unité d'évaluation pas à pas (22) qui surveille la rotation pas à pas du moteur pas à pas (12) et/ou de l'élément rotatif (20), et détecte un blocage de cet élément et/ou une rotation en sens inverse de la rotation du moteur prédéfinie,
**caractérisée en ce que**
l'unité d'évaluation (22) comporte un compteur (24) du nombre de tentatives de pas du moteur pas à pas (12) lorsque l'élément (20) est bloqué, et ne déclenche un signal (26) que lorsque le moteur pas à pas (12) est bloqué pour un nombre prédéterminé de pas, et, après déclenchement du signal (26) le moteur pas à pas (12) redémarre après une durée prédéfinie.

2. Indicateur de niveau conforme à la revendication 1,
**caractérisé en ce que**
la durée prédéterminée avant le redémarrage du moteur pas à pas est réglable.

3. Indicateur de niveau conforme à la revendication 1 ou 2,
**caractérisé en ce que**
le nombre prédéfini de tentatives de pas jusqu'au déclenchement du signal (26) est réglable.

4. Indicateur de niveau conforme à l'une des revendications 1 à 3,
**caractérisé en ce que**
la vitesse de rotation du moteur pas à pas (12) est réglable.

5. Indicateur de niveau conforme à l'une des revendications 1 à 4,
**caractérisé en ce que**
le couple de rotation du moteur pas à pas (12) est réglable.

6. Indicateur de niveau conforme à l'une des revendications 1 à 5,
**caractérisé en ce que**
le nombre de pas jusqu'au déclenchement du signal et/ou la vitesse de rotation et/ou le couple de rotation et/ou la durée jusqu'à la mise en marche du moteur pas à pas peuvent être réglés par l'intermédiaire d'un commutateur (28).

7. Indicateur de niveau conforme à l'une des revendications 1 à 6,
**caractérisé en ce que**
le sens de rotation du moteur pas à pas (12) est réglable.

8. Indicateur de niveau conforme à l'une des revendications 1 à 7,
**caractérisé en ce que**
le moteur pas à pas (12), l'unité d'évaluation (22), le compteur (24) et/ou l'horloge (25) et/ou le commutateur (28) sont installés dans le boîtier de l'indicateur de niveau.

9. Indicateur de niveau conforme à l'une des revendications 1 à 8,
**caractérisé en ce que**
l'unité d'évaluation, le compteur, et/ou l'horloge et/ou le commutateur sont installés à l'extérieur du boîtier de l'indicateur de niveau.

10. Procédé permettant de déterminer le niveau d'un récipient avec un élément rotatif entraîné par l'intermédiaire d'un moteur électrique pas à pas dont la rotation est empêchée par des produits en vrac lorsqu'a été atteint un niveau (21) prédéfini,
procédé selon lequel la rotation pas à pas du moteur pas à pas est surveillée, et un arrêt du moteur pas à pas ou un blocage de l'élément rotatif ou une rotation de l'élément rotatif en sens inverse du sens de rotation prédéfini est détecté,
**caractérisé en ce que**
le nombre de tentatives de pas infructueuses successives est détecté, en présence d'un dépassement d'un nombre pouvant être prédéfini de tentatives de pas infructueuses successives, un signal représentant le niveau est produit, et après déclenchement du signal, le moteur pas à pas est à nouveau mis en marche après une durée pouvant être prédéfinie.

11. Procédé conforme à la revendication 10,
**caractérisé en ce qu'**
en tant que paramètres, le couple de rotation, la vitesse de rotation, le temps d'arrêt, le temps de repos et/ou le nombre de tentatives de pas infructueuses successives jusqu'à la production du signal peuvent être réglés.

12. Procédé conforme à l'une quelconque des revendications 10 et 11,
**caractérisé en ce qu'**
au moins deux et de préférence tous les paramètres pouvant être réglés peuvent être réglés directement en tant que paramètres concernant une grandeur préréglée et selon une relation définie les uns par rapport aux autres, par l'intermédiaire d'au moins un commutateur de présélection.

13. Procédé conforme à l'une quelconque des revendications 10 à 12,
**caractérisé en ce qu'**
après déclenchement du signal, le moteur pas à pas est coupé pendant une durée prédéfinie.
